# EUROPÄISCHE PATENTANMELDUNG

(11) **EP 1 167 285 A2**
(43) Veröffentlichungstag der Anmeldung: **02.01.2002**
(21) Anmeldenummer: 01113634.8
(22) Anmeldetag: 18.06.2001
(51) Int. Cl.: C01B 7/19

(54) **Verfahren zur Abtrennung von Arsenverbindungen aus Fluorwasserstoff**

(30) Priorität: 28.06.2000 DE 10031566
(71) Anmelder: Bayer Aktiengesellschaft, 51368 Leverkusen (DE)
(72) Erfinder: Bulan, Andreas, 40764 Langenfeld (DE); Lailach, Günter, Dr., 47799 Krefeld (DE)

(57) **Zusammenfassung**

Die Erfindung betrifft ein neues Verfahren zum Abtrennen von Arsenverbindungen aus dem Destillationssumpf der Fluorwasserstoffdestillation, dadurch gekennzeichnet, dass der Destillationssumpf zunächst durch Verdampfen von Fluorwasserstoff aufkonzentriert wird bis die Sumpftemperatur 40 bis 60°C beträgt und dann der Rückstand mit Calciumhydroxid, Calciumoxid oder einer Mischung daraus umgesetzt wird und liefert mit geringem Verfahrensaufwand ein deponiefähiges Produkt.

## Beschreibung

Die Erfindung betrifft ein Verfahren zum Abtrennen von Arsenverbindungen aus dem Destillationssumpf bei der destillativen Reinigung von Fluorwasserstoff.

Die Reinigung von Fluorwasserstoff wird üblicherweise so durchgeführt, dass das im Fluorwasserstoff vorliegende Arsen der Oxidationsstufe III durch ein Oxidationsmittel oxidiert wird. Hierdurch wird das Arsen in eine schwerflüchtige Arsen-V-Verbindung überführt, von der der Fluorwasserstoff durch Destillation abgetrennt werden kann.

Als Oxidationsmittel eignen sich hierzu eine Vielzahl von Verbindungen. Beispielsweise elementares Fluor (vgl. US 46 68 497), Sauerstoffdifluorid (vgl. EP-A 610 748) oder elektrochemische Oxidation (vgl. JP 46-15768). Durch die nach der Oxidation durchgeführte Destillation wird als Kopfprodukt arsenarmer Fluorwasserstoff und als Sumpfprodukt ein arsenreicher Sumpf erhalten.

Die Arsenentfernung aus dem Destillationssumpf kann gemäß Stand der Technik (vgl. EP 660803) dadurch erfolgen, dass nach durchgeführter Oxidation der Sumpf, der einen Wassergehalt von 75 bis 95 Gew.-% hat, einer weiteren Destillation unterzogen wird. In dem nun verbleibenden Sumpf wird durch Zugabe bestimmter Alkaliund Erdalkaliverbindungen ein pH-Wert von größer als 10 eingestellt, wodurch gleichzeitig die Calcium- bzw. Magnesiumhexafluoroarsenate gebildet werden. Durch anschließendes Erhitzen werden die Hexafluoroarsenate hydrolysiert und die entsprechenden Arsenate gebildet. Diese Arsenate sind schwerlöslich.

Eine andere Möglichkeit zur Entfernung von Arsen besteht gemäß US 5089241 darin die Hexafluoroarsensäure direkt zu hydrolysieren. Hierzu wird die Hexafluoroarsensäure-haltige wässrige Lösung mit Schwefelsäure, Arsensäure, Perchlorsäure oder Mischungen daraus versetzt, um die Hydrolyse zu Arsensäure zu katalysieren. Anschließend wird aus dieser Mischung Fluorwasserstoff abdestilliert.

Nachteilig an den bekannten Verfahren ist, dass ein hoher Aufwand zur Hydrolyse des Hexafluoroarsenations betrieben werden muss. Trotz dieses Aufwandes muss der gemäß EP-A 660 803 erhaltene Arsenat-halige Rückstand einer Sonderdeponie zugeführt werden.

Aufgabe der vorliegenden Erfindung war es daher, bei der Herstellung von reinem Fluorwasserstoff deponiefähige Arsenverbindungen mit möglichst geringem Verfahrensaufwand abzutrennen, wobei die Menge an zu deponierendem Material möglichst gering sein sollte.

Es wurde gefunden, dass der Destillationssumpf, wie er bei der destillativen Reinigung von Fluorwasserstoff anfällt, durch Umsetzung mit Calciumhydroxid, Calciumoxid oder deren Mischung direkt in ein deponiefähiges Produkt umwandeln lässt.

Die vorliegende Erfindung betrifft demnach ein Verfahren zur Abtrennung von Arsenverbindungen aus dem Destillationssumpf der Fluorwasserstoffdestillation, dadurch gekennzeichnet, dass der Destillationssumpf zunächst durch Verdampfen von Fluorwasserstoff aufkonzentriert wird bis die Sumpftemperatur 40 bis 60°C vorzugsweise 40 bis 50°C beträgt und dann der Rückstand mit Calciumhydroxid, Calciumoxid oder einer Mischung daraus umgesetzt wird.

Die Menge an Calciumhydroxid, -oxid oder Gemisch wird so bemessen, dass sie zur stöchiometrischen Umwandlung der im Rückstand enthaltenden Bestandteile H₂SO₄ und HAsF₆ in CaF₂, CaSO₄ und Ca(AsF₆)₂ ausreicht, maximal ist ein Überschuss von 100 Gew.-% möglich. Vorzugsweise liegt der Gehalt an Wasser im Sumpf nach der Aufkonzentrierung, wenn eine Sumpftemperatur von 40 bis 60°C erreicht ist unterhalb von 20 Gew.-%.

Das erfindungsgemäße Verfahren dient zur Aufarbeitung von Destillationssümpfen wie sie bei der destillativen Reinigung von handelsüblichem Fluorwasserstoff anfallen.

Handelsüblicher Fluorwasserstoff weist im Allgemeinen einen Gehalt an Arsen von 15 bis 500 ppm auf, sowie einen Gehalt an Wasser von 200 bis 1000, Schwefelsäure von 20 bis 500 ppm und Schwefeldioxid von 20 bis 200 ppm.

Für die Durchführung des erfindungsgemäßen Verfahrens besonders geeignet ist Fluorwasserstoff mit weniger als 300 ppm, bevorzugt weniger als 200 ppm Wasser, weniger als 50 ppm, bevorzugt weniger als 20 ppm Schwefelsäure, weniger als 50 ppm, bevorzugt weniger als 20 ppm Schwefeldioxid und einem Gehalt an Arsen von 30 bis 500 ppm.

Zur Umwandlung von Arsen der Oxidationsstufe (III) in Arsen der Oxidationsstufe (V) wird der Fluorwasserstoff mit einem Oxidationsmittel behandelt. Für die Durchführung des erfindungsgemäßen Verfahrens ist es bevorzugt das Arsen (III) mittels Fluor, Sauerstoffdifluorid oder elektrochemisch zu oxidieren.

Der so behandelte Fluorwasserstoff wird destilliert. Dabei wird als Kopfprodukt ein Fluorwasserstoff mit weniger als 100 ppm Wasser, weniger als 10 ppm Schwefelsäure und weniger als 1 ppm Arsen erhalten. Die Destillation erfolgt üblicherweise in einer Destillationskolonne, deren Werkstoff Stahl, bevorzugt C-Stahl, ist, bei einer Sumpftemperatur von maximal 30°C, bevorzugt maximal 26°C, wobei ein Sumpfprodukt mit einem Fluorwasserstoffgehalt von mindestens 98 Gew.-% abgezogen wird, und einem Arsengehalt von 500-2000 ppm.

Die Destillation wird üblicherweise bei einem Druck von 0,6 bis 2 bar, bevorzugt 0,9-1,1 bar durchgeführt.

Das abgezogene Sumpfprodukt wird einem Verdampfer zugeführt, der durch eine Kunststoffauskleidung korrosionsgeschützt ist. Die Fluorwasserstoffbrüden aus dem Verdampfer können kondensiert werden, werden jedoch vorzugsweise in die Destillationskolonne zurückgeführt.

Der flüssige Rückstand aus dem Verdampfer wird mit Calciumhydroxid, Calciumoxid oder Mischung daraus umgesetzt. Die Umsetzung kann z.B. in einem Mischer oder Kneter durchgeführt werden. Die Reaktionsprodukte Calciumfluorid, Calciumsulfat, Calciumsulfatdihydrat und Calciumhexafluoroarsenat werden in trockener oder feuchter Form einer geeigneten Deponie zugeführt.

### Beispiel

Ein Massenstrom von 2 t/h Fluorwasserstoff mit einer Wasserkonzentration ca. 100 ppm, einer Schwefelsäurekonzentration von 18 ppm und einer Arsenkonzentration von 32 ppm wurde mit 300 l/h einer Mischung von 10 Vol-% Fluor in Stickstoff kontaktiert, um Arsentrifluorid zu Arsenpentafluorid zu oxidieren, das mit Fluorwasserstoff Hexafluoroarsensäure bildet, und anschließend in eine Destillationskolonne zur Abtrennung von hochsiedenden Verbindungen eingespeist. Über Kopf der Kolonne wurden 1,9 t/h hochreiner Fluorwasserstoff entnommen, dessen Gehalte an Wasser weniger als 100 ppm, Schwefelsäure weniger als 5 ppm und Arsen weniger als 0,3 ppm betrugen. Die Sumpftemperatur der Destillationskolonne betrug 24°C. Der Werkstoff der Kolonne war C-Stahl. Der Destillationssumpf enthielt 99,6 Gew.-% Fluorwasserstoff, 0,2 Gew.-% Wasser, 0,037 Gew.-% Schwefelsäure und 0,165 Gew.-% Hexafluoroarsensäure.

Dem Sumpf der Destillationskolonne wurde ein Strom von 0,1 t/h entnommen und einem Verdampfer zugeführt. Der Verdampfer wurde betrieben, bis die Siedetemperatur von 24°C auf 48°C gestiegen war. Der aus dem Verdampfer entweichende Fluorwasserstoff wurde kondensiert. Nach Erreichen der Siedetemperatur von 48°C wurde der flüssige Inhalt des Verdampfers analysiert. Die Zusammensetzung betrug 64 Gew.-% Fluorwasserstoff, 17,3 Gew.-% Wasser, 3,4 Gew.-% Schwefelsäure und 15,3 Gew.-% Hexafluoroarsensäure. Dieser Rückstand wurde in einem Kneter mit Calciumoxid im Gewichtsverhältnis 1:1,5 umgesetzt. Dem Kneter konnte ein krümeliges Produkt entnommen werden, das einer geeigneten Deponie zugeführt wurde.

## Patentansprüche

1. Verfahren zum Abtrennen von Arsenverbindungen aus dem Destillationssumpf der Fluorwasserstoffdestillation, **dadurch gekennzeichnet, dass** der Destillationssumpf zunächst durch Verdampfen von Fluorwasserstoff aufkonzentriert wird bis die Sumpftemperatur 40 bis 60°C beträgt und dann der Rückstand mit Calciumhydroxid, Calciumoxid oder einer Mischung daraus umgesetzt wird.

2. Verfahren gemäß Anspruch 1, **dadurch gekennzeichnet, dass** der Wassergehalt im Sumpf nach der Aufkonzentrierung unterhalb von 20 Gew.-% liegt.

3. Verfahren gemäß wenigstens einem der Ansprüche 1 und 2, **dadurch gekennzeichnet, dass** der eingesetzte arsenhaltige Fluorwasserstoff maximal 300 ppm Wasser, maximal 50 ppm Schwefelsäure und maximal 50 ppm Schwefeldioxid enthält.

4. Verfahren gemäß wenigstens einem der Ansprüche 1 bis 3, **dadurch gekennzeichnet, dass** eine Menge an Caiciumhydroxid, Calciumoxid oder deren Mischung eingesetzt wird, die der zur stöchiometrischen Umwandlung der Sumpfprodukte Schwefelsäure, Flußsäure und Hexafluorarsensäure in die entsprechenden Calciumverbindungen notwendigen Menge entspricht.
